# EUROPEAN PATENT APPLICATION

(11) **EP 4 755 200 A1**
(43) Date of publication of application: **10.06.2026**
(21) Application number: 24849065.8
(22) Date of filing: 25.07.2024
(51) Int. Cl.: A23L 7/104, A23C 11/10, A23L 2/00, A23L 2/38, A23L 2/52, A23L 2/60, A23L 9/20, A23L 11/60, A23L 11/65, A23L 27/00, A23L 29/30

(54) **PLANT MILK COMPOSITION**

(30) Priority: 01.08.2023 JP 2023125872
(71) Applicant: ADEKA CORPORATION, Arakawa-ku Tokyo 116-8554 (JP)
(72) Inventor: MAEDA, Hiromu, Tokyo 116-8554 (JP); INOUE, Keita, Tokyo 116-8554 (JP); NAKAGAWA, Kazuya, Tokyo 116-8554 (JP); FUKAZAWA, Takahiro, Tokyo 116-8554 (JP)
(74) Representative: Forstmeyer, Dietmar
(86) International application number: PCT/JP2024/026710
(87) International publication number: WO 2025/028411

(57) **Abstract**

The invention provides a plant-based milk composition comprising a liquefied grain solution and a saccharified grain solution, and a method for producing a plant-based milk composition, comprising mixing a liquefied grain solution and a saccharified grain solution. The grain in the liquefied grain solution or saccharified grain solution preferably includes oats. A raw grain for the liquefied grain solution and a raw grain for the saccharified grain solution are preferably the same. The saccharified grain solution is preferably present in an amount of 0.01 to 3 parts by mass per 1 part by mass of the liquefied grain solution, both in terms of solids content. It is preferable that a total content of trisaccharides and higher-saccharides should be larger than a total content of monosaccharides and disaccharides in the saccharide profile of the liquefied grain solution, and that a total content of monosaccharides and disaccharides should be smaller than a total content of trisaccharides and higher-saccharides in the saccharide profile of the saccharified grain solution.

## Description

### Technical Field

The present invention relates to a plant-based milk composition.

### Background Art

Milk and other animal milks, which are intended for suckling, are highly nutritious and well-balanced. Thus, they have been widely consumed as beverages since ancient times and have also been widely used as food ingredients.

However, animal milk can only be produced in the lactation period, limiting both the production volume and the period during which it can be produced. Therefore, it has often been customary practice to make a milky white liquid similar to animal milk from plants that can be stably produced and use it as plant-based milk. Examples thereof include coconut milk, rice milk, soy milk, and almond milk, which are produced by grinding a part or the whole of grains, beans, seeds, nuts, fruits, or the like, suspending the grounded product in water, and sometimes further subjecting the suspension to enzymatic decomposition.

In recent years, plant-based foods have increasingly been chosen for various reasons in view of diverse perspectives including reduced environmental impact, health benefits, and allergen avoidance. Consequently, plant-based milks have become more prevalent in the market.

As a matter of course, these plant-based milks are expected to deliver a flavor similar to animal milk, particularly cow's milk, that is, a milky flavor. However, these plant-based milks have faced the problem of retaining a flavor and bitterness characteristic of their plant sources.

Furthermore, plant-based milks have the following various problems: their low solids contents result in lower nutritional value; their low sugar contents yield less sweetness; their smaller protein and fat contents create a light flavor lacking richness; and they are prone to causing grit or sediment, due to low water solubility of starch and protein therein and also their high dietary fiber content.

Accordingly, when producing plant-based milk with a high solids content to enhance nutritional value and flavor, not only the plant's characteristic flavors and bitterness become more pronounced, but also the problems of grit and sediment become even more severe.

For this reason, plant-based milk often undergoes enzymatic decomposition processing for starch contained therein. This enzymatic decomposition of starch increases sweetness, thereby bringing the flavor of the plant-based milk closer to that of cow's milk and thus enhancing the milky flavor. The enzymatic decomposition of starch also increases the water solubility of carbohydrates to prevent grit and sediment.

However, the saccharides produced by decomposition of starch differ from lactose, which is the main sweet component of cow's milk, and have a higher sweetness intensity, resulting in excessive sweetness that prevents the production of plant-based milk with a desirable milky flavor.

Furthermore, because of the rapid increase in sweetness due to the progression of enzymatic decomposition, it is difficult to determine the endpoint of the enzymatic decomposition, and it is thus extremely challenging to obtain plant-based milk with the desired sweetness and physical properties. This also easily leads to variation in the flavor and physical properties between batches, particularly in sweetness and water solubility, making stable production difficult.

Therefore, alternative methods to enzymatic processing have been employed, and examples thereof include separately adding various saccharides to a liquid from enzymatic processing of grains so as to achieve the desired flavor and sweetness; sequentially adding two types of enzymes to a raw grain (see Patent Document 1); roasting a raw grain before enzymatic decomposition (see Patent Documents 2 and 3); and using two or more enzymes in combination (see Patent Documents 4 and 5).

However, while the method including separately adding saccharides enables easy adjustment to a desired sweetness level and sweetness quality, it does not solve the problems of sediment and grit removal. The methods described in Patent Literatures 2 and 3, which involve roasting and then enzymatic decomposition, yield plant-based milk with richness and a reduced sweetness level, but they fail to provide natural sweetness. The methods described in Patent Literatures 1, 4, and 5, which involve use of two or more enzymes in combination, result in unbalanced saccharide profile and therefore unfortunately provide unnatural sweetness.

### Citation List

### Patent Literature

Patent Literature 1: JP 2009-142183A
Patent Literature 2: JP 2004-121135A
Patent Literature 3: JP 2021-040553A
Patent Literature 4: JP 2009-207359A
Patent Literature 5: JP 2020-039283A

### Summary of Invention

Therefore, an object of the present invention is to provide a plant-based milk that has natural sweetness and richness, has fluidity even with a high solids content, is free from grit or sediment, and thus offers great convenience; and another object of the present invention is to provide a method for producing a plant-based milk having such characteristics stably with consistent quality and minimal variation.

As a result of extensive studies to achieve the above objects, the present inventors have found that the problems can be solved by incorporating two types of decomposition solutions into plant-based milk.

Specifically, the present invention provides a plant-based milk composition comprising a liquefied grain solution and a saccharified grain solution.

The present invention also provides a method for producing a plant-based milk composition, the method comprising mixing a liquefied grain solution and a saccharified grain solution.

### Description of Embodiments

The plant-based milk of the present invention will now be described in detail.

The present invention relates to a plant-based milk composition comprising a liquefied grain solution and a saccharified grain solution.

First, the liquefied grain solution used for the plant-based milk composition of the present invention will be described.

The liquefied grain solution refers to a liquid obtained by randomly cleaving and thus decomposing starch in grain into dextrins and oligosaccharides to render the starch water-soluble.

Examples of the method for liquefying grain include acid liquefaction, which involves use of an acid, and enzymatic liquefaction, which involves use of a liquefying enzyme. Enzymatic liquefaction is preferable in view of avoiding discoloration and preventing off-flavors.

A specific method for producing a liquefied grain solution is as follows: a suspension of grain powder in water, or an extract liquid or juice from grain, or a liquid obtained by crushing or grinding grain is provided as the grain serving as the raw material (hereinafter also referred to as "raw grain material"); the raw grain material is heated as necessary, and the starch in the grain is randomly cleaved with an acid or a liquefying enzyme so that the starch become soluble. Examples of the liquid obtained by grinding grain include a slurry obtained by wet grinding the grain or grain powder.

The liquefying enzyme may be any enzyme that randomly cleaves the α-1,4 bonds of starch, and α-amylase (EC 3.2.1.1) is preferably used. In cases where α-amylase is used, it may be a commercially available α-amylase preparation, including KLEISTASE L1 and BIOZYME A (both from Amano Enzyme Inc.), BIOTEX L#3000, BIOTEX TS, SPITASE HS, SPITASE CP-40FG, SPITASE CP3, SPITASE L, SPITASE XP-404, NEOSPITASE PK-2, T-50 (all from Nagase ChemteX Corporation), GRINDAMYL A (from Danisco Japan Corporation), BAN and Fungamyl (both from Novozymes Japan), FUKUTAMYLASE 30, FUKUTAMYLASE 50, FUKUTAMYLASE 10L, and LIQUIFASE L45 (all from HBI Enzymes Inc.), VERON Soft+, VERONVERON M4, and Sternzyme A6003 (all from HIGUCHI INC.), UNIASE BM-8 (from Yakult Pharmaceutical Industries Co., Ltd.), SOFTERGEN 3H (from TAISHO TECHNOS Co., Ltd.), BakeZyme AN301, Mat L Classic, Mycolase, and BakeZyme P500 (all from DSM), and Sumiteam AS and Sumiteam L (both from SHINNIHON CHEMICALS Corporation).

The amount of the liquefying enzyme added is preferably 0.001 to 3 mass%, more preferably 0.05 to 2 mass%, and even more preferably 0.1 to 1 mass%, based on the amount of the grain serving as the raw material. Herein, the "amount of the grain serving as the raw material" refers to the amount of the raw grain material in terms of solids, and for example, the amount of powder. Specifically, in cases where a suspension of grain powder in water or a liquid obtained by crushing or grinding grain is used as the raw grain material, it refers to the amount of grain powder contained in the suspension or liquid; and in cases where an extract liquid or juice from grain is used, it refers to the amount of grain powder obtained by drying the extract liquid or juice.

The reaction temperature and the reaction time for the liquefying enzyme can be tailored to the type of liquefying enzyme used and the type of grain used as the raw material. The reaction temperature is preferably 45°C to 120°C, more preferably 50°C to 110°C, and the reaction time is preferably 0.01 hours to 24 hours, more preferably 0.1 hours to 12 hours.

In view of ensuring the compositional stability of the liquefied grain solution to be obtained, the amount of the enzyme added, the reaction temperature, and the reaction time in the production of the liquefied grain solution are preferably such that the enzyme reaction proceeds until the enzyme reaction reaches equilibrium. The above-described conditions of the amount of enzyme added, the reaction temperature, and the reaction time are particularly preferable for batchwise processes.

In batchwise processes, it is necessary to inactivate the enzyme after the enzyme reaction. In cases where an immobilized enzyme is used instead of a batchwise process, enzyme inactivation is not necessary.

Examples of the raw grain for the liquefied grain solution include beans, cereals from Poaceae, and nuts.

Examples of the beans include soybeans, adzuki (red) beans, chickpeas, green peas, green gram, broad beans, lentils, and kidney beans.

Examples of the cereals from Poaceae include rice, barley, wheat, adlay, rye, oats, millet, and sorghum.

The nuts may be seeds other than the cereals from Poaceae and the beans, and examples thereof include buckwheat, quinoa seeds, lupine seeds, chia seeds, sunflower seeds, pumpkin seeds, watermelon seeds, pine nuts, peach kernels, safflower seeds, canola seeds, peanuts, hazelnuts, almonds, cashew nuts, macadamia nuts, pistachios, coconut, sesame seeds, walnuts, and hempseed.

In the present invention, it is preferable to use one or more selected from the group consisting of almonds, rice, soybeans, oats, chickpeas, and green peas, in view of highly exhibiting the intended effect of the present invention and especially obtaining a favorable milky flavor, and oats are particularly preferably used in view of obtaining a more favorable milky flavor. When grains of two or more plant species are used as the raw grain, it is preferable that the mass percentage of the aforementioned preferred grain in the raw grain should be greater than 50 mass%, and more preferably 80 mass% or more (the same also applies to the saccharified grain solution, which will be described later).

The raw grain used may be roasted grain or may be gelatinized grain.

The total content of trisaccharides and higher-saccharides is preferably larger than the total content of monosaccharides and disaccharides in the saccharide profile of the liquefied grain solution. Specifically, the total content of trisaccharides and higher-saccharides is preferably 50 mass% or more, more preferably 70 mass% or more, and preferably 95 mass% or less, more preferably 90 mass% or less, in the saccharide profile of the liquefied grain solution. As a range, the total content of trisaccharides and higher-saccharides is preferably 50 to 95 mass%, and more preferably 70 to 90 mass%, in the saccharide profile of the liquefied grain solution. The total content of monosaccharides and disaccharides is preferably 49 mass% or less, more preferably 30 mass% or less, and preferably 5 mass% or more, more preferably 10 mass% or more, in the saccharide profile of the liquefied grain solution. As a range, the total content of monosaccharides and disaccharides is preferably 5 to 49 mass%, and more preferably 10 to 30 mass%, in the saccharide profile of the liquefied grain solution. Herein, the trisaccharides and higher-saccharides in the saccharide profile include oligosaccharides (the number of saccharides linked is 3 to 10) and dextrins (the number of saccharides linked is 11 or more).

In the present invention, the method for determining the saccharide profile is not particularly limited and may be any of conventionally known methods. For example, the saccharide profile may be determined using gel permeation chromatography (GPC). Specifically, the material of interest (a liquefied grain solution, a saccharified grain solution, or a plant-based milk composition) as a sample is subjected to the GPC to obtain a chromatogram. In the resulting chromatogram, the total sum of all peak areas corresponds to the "total mass of saccharides", and the area of each peak corresponds to the "mass of each saccharide". Then, the content of a saccharide (monosaccharide, disaccharide, trisaccharide or higher-saccharide) can be calculated as the mass percentage of the saccharide in the sample, which is the proportion of the area of its peak to the total sum of the areas of all detected peaks. The conditions for gel permeation chromatography may be as follows.

### Conditions for Determination using Gel Permeation Chromatography (GPC)

GPC Instrument: HLC-8320GPC, from TOSOH CORPORATION
Detector: Differential Refractive Index Detector
GPC Column: G6000PWXL+SB802
Solvent: Deionized Water
Sample Concentration: 0.6%
Injection Volume: 50 µl
Solvent Flow Rate in Column: 0.5 mL/min

Next, the saccharified grain solution used for the plant-based milk composition of the present invention will be described.

The saccharified grain solution refers to a highly sweet liquid obtained by decomposing the starch such that the resultant contains mainly monosaccharides and saccharides composed of a smaller number of monosaccharides linked (hereinafter also referred to as "smaller saccharides"), such as disaccharides, whereas the aforementioned liquefied grain solution generally contains a large amount of dextrin and is therefore a liquid with a high viscosity.

Examples of the method for saccharifying grain include acid saccharification, which involves use of an acid, and enzymatic saccharification, which involves use of a saccharifying enzyme. Enzymatic saccharification with an enzyme is preferable in view of avoiding discoloration and preventing off-flavors.

A specific exemplary method involves use of the above-described liquefied grain solution as the raw material liquid, and includes decomposing dextrins and oligosaccharides into monosaccharides and smaller saccharides with an acid or saccharifying enzyme to produce a saccharide solution having high sweetness. Another specific exemplary method includes providing a raw grain material (such as a suspension of grain powder in water, or an extract liquid or juice from grain, or a liquid obtained by crushing or grinding grain), and decomposing the starch in the grain, optionally while heating, directly into monosaccharides and smaller saccharides with a combination of a saccharifying enzyme with a liquefying enzyme or with an acid or saccharifying enzyme, to produce a saccharide solution having a high sweetness level. The method involving combination use of a saccharifying enzyme with a liquefying enzyme to directly obtain a saccharified grain solution is preferable since the method is simple to operate and can reduce production time.

Examples of the liquefying enzyme include those listed above for the liquefied grain solution.

Examples of the saccharifying enzyme include β-amylase (EC 3.2.1.2) and glucoamylase (EC 3.2.1.3). The saccharifying enzymes may be used singly or in combination according to the desired sweetness.

In cases where β-amylase (EC 3.2.1.2) is used as the saccharifying enzyme, a solution rich in maltose, which is a disaccharide, can be obtained. In cases where β-amylase is used, it may be a commercially available β-amylase preparation, including Secura (from Novozymes Japan Ltd.), High Maltosine G, High Maltosine GL, and High Maltosine GLH (all from HBI Enzymes Inc.), β-amylase #1500S and β-amylase L/R (both from Nagase ChemteX Corporation), and β-amylase F "Amano" (from Amano Enzyme Inc.).

The amount of β-amylase added is preferably 0.001 to 3 mass%, more preferably 0.05 to 2 mass%, and even more preferably 0.1 to 1 mass%, based on the amount of the grain serving as the raw material.

In cases where glucoamylase (EC 3.2.1.3) is used as the saccharifying enzyme, a solution rich in glucose, which is a monosaccharide, can be obtained. In cases where glucoamylase is used, it may be a commercially available glucoamylase preparation, including Amigase and BakeZyme AG800 (both from DSM), Amylase AG, AMG 1100BG, and AMG 300L (all from Novozymes Japan Ltd.), Gluczyme AF6 and Gluczyme NL4.2 (both from Amano Enzyme Inc.), Glucoteam #2000, Denateam GSA/R, and Nagase enzyme preparation N-40 (all from Nagase ChemteX Corporation), Glutase AN (from HBI Enzymes Inc.), and Kokulase G2 (from MITSUBISHI-CHEMICAL FOODS CORPORATION).

The amount of glucoamylase added is preferably 0.001 to 3 mass%, more preferably 0.05 to 2 mass%, and even more preferably 0.1 to 1 mass%, based on the amount of the grain serving as the raw material.

In addition to the aforementioned β-amylase and/or glucoamylase, a so-called branch-cutting enzyme can also be added. The branch-cutting enzyme is an enzyme used to cleave the α-1,6 bonds of dextrins generated during liquefaction. Examples thereof include pullulanase (EC 3.2.1.41) and isoamylase (EC 3.2.1.68).

In view of ensuring the compositional stability of the saccharified grain solution to be obtained, the amount of the enzyme added, the reaction temperature, and the reaction time in the production of the saccharified grain solution are preferably such that the enzyme reaction proceeds until the enzyme reaction reaches equilibrium.

The above-described conditions of the amount of the enzyme added, the reaction temperature, and the reaction time are particularly preferable for batchwise processes.

In batchwise processes, it is necessary to inactivate the enzyme after the enzyme reaction. In cases where an immobilized enzyme is used instead of a batchwise process, enzyme inactivation is not necessary.

In cases of methods involving combination use of a saccharifying enzyme with a liquefying enzyme to directly obtain a saccharified grain solution, it is preferable to use α-amylase (EC 3.2.1.1) as the liquefying enzyme and glucoamylase (EC 3.2.1.3) as the saccharifying enzyme.

Examples of the raw grain used for the saccharified grain solution include those listed above for production of the liquefied grain solution. Preferable examples of the grain for the saccharified grain solution are also the same as those for the liquefied grain solution.

Accordingly, it is preferable for the saccharified grain solution to use one or more selected from the group consisting of almonds, rice, soybeans, oats, chickpeas, and green peas, and oats are particularly preferably used in view of obtaining a more favorable milky flavor. Thus, the grain in the liquefied grain solution or saccharified grain solution preferably includes oats.

The raw grain used may be roasted grain or be gelatinized grain, as with the case of the liquefied grain solution.

The total content of monosaccharides and disaccharides is preferably smaller than the total content of trisaccharides and higher-saccharides in the saccharide profile of the saccharified grain solution. Specifically, the total content of monosaccharides and disaccharides is preferably 51 to 100 mass%, more preferably 70 to 100 mass%, in the saccharide profile of the saccharified grain solution. The total content of trisaccharides and higher-saccharides is preferably 0 mass% or more and less than 50 mass%, more preferably 0 to 49 mass%, and particularly preferably 0 to 30 mass%, in the saccharide profile.

It is preferable that the liquefied grain solution and the liquefied grain solution each should contain, in the solids thereof, substantially no components other than the raw grain material, decomposition products therefrom, and the enzyme. The expression "contain, in the solids thereof, substantially no component other than the raw grain material, decomposition products therefrom, and the enzyme" means that the proportion of the components other than the raw grain material, decomposition products therefrom, and the enzyme in the solids content is 20 mass% or less, preferably 10 mass% or less, more preferably 7 mass% or less, and particularly preferably 3 mass% or less.

The plant-based milk composition of the present invention is characterized in that it comprises the liquefied grain solution and the saccharified grain solution.

The plant-based milk composition of the present invention may include one or more types of the liquefied grain solution and one or more types of the saccharified grain solution, and preferably include a single type of the liquefied grain solution and a single type of the saccharified grain solution.

The raw grain for the liquefied grain solution and the raw grain for the saccharified grain solution may be different from each other, but are preferably the same in view of coordination of flavor and taste of the plant-based milk composition obtained. The expression "the raw grain for the liquefied grain solution and the raw grain for the saccharified grain solution are the same" means that they include seeds of the same plant species, the plant species including soybeans, adzuki (red) beans, rice, barley, wheat, adlay, rye, oats, buckwheat, quinoa seeds, millet, sorghum, chickpeas, green peas, green gram, broad beans, lentils, lupine seeds, kidney beans, chia seeds, sunflower seeds, pumpkin seeds, watermelon seeds, pine nuts, peach kernels, safflower seeds, canola seeds, peanuts, hazelnuts, almonds, cashew nuts, macadamia nuts, pistachios, coconut, sesame seeds, walnuts, and hempseeds. In cases where either one of the raw grain for the liquefied grain solution and that for the saccharified grain solution includes seeds of multiple plant species, the mass percentage of seeds of the plant species common to the liquefied grain solution and the saccharified grain solution is preferably more than 50 mass%, and more preferably 80 mass% or more, based on the components derived from the raw grain.

In view of obtaining a particularly favorable flavor, it is preferable to use, for both the liquefied grain solution and the saccharified grain solution, one or more of the same grain(s) selected from the group consisting of almonds, rice, soybeans, oats, chickpeas, and green peas. Oats are most preferably used for both the liquefied grain solution and the saccharified grain solution, in view of obtaining an especially favorable milky flavor.

The proportion of the liquefied grain solution in the plant-based milk composition of the present invention is preferably 90 mass% or less, and particularly preferably 80 mass% or less, in view of further reducing the risk of grit and sediment. The proportion of the liquefied grain solution is preferably 10 mass% or more, more preferably 20 mass% or more, and particularly preferably 50 mass% or more, in view of reducing the risk of an excessively weak taste of the plant-based milk composition. As a range, the proportion of the liquefied grain solution in the plant-based milk composition of the present invention is preferably 10 to 90 mass%, more preferably at 20 to 90 mass%, and particularly preferably at 50 to 80 mass%.

The proportion of the saccharified grain solution in the plant-based milk composition of the present invention is preferably 60 mass% or less, more preferably 50 mass% or less, and particularly preferably 40 mass% or less. The proportion of the saccharified grain solution in the plant-based milk composition of the present invention is preferably 1 mass% or more, more preferably 5 mass% or more, and particularly preferably 10 mass% or more. As a range, the proportion of the saccharified grain solution in the plant-based milk composition of the present invention is preferably 1 to 60 mass%, more preferably 5 to 50 mass%, and particularly preferably 10 to 40 mass%.

The total proportion of the liquefied grain solution and the saccharified grain solution in the plant-based milk composition of the present invention is preferably 11 to 100 mass%, more preferably 30 to 98 mass%, and preferably 50 to 98 mass%.

In the plant-based milk composition of the present invention, the ratio between the amount of the liquefied grain solution used and that of the saccharified grain solution used is preferably such that the saccharified grain solution is present in an amount of 0.01 parts by mass or more, more preferably 0.2 parts by mass or more, and preferably 3 parts by mass or less, more preferably 1 part by mass or less, particularly preferably 0.6 parts by mass or less, per 1 part by mass of the liquefied grain solution, all in terms of solids content. As a preferable range, the above-mentioned ratio is preferably such that the saccharified grain solution is present in an amount of 0.01 to 3 parts by mass, more preferably 0.01 to 1 part by mass, and particularly preferably 0.2 to 0.6 parts by mass, per 1 part by mass of the liquefied grain solution, all in terms of solids content.

The plant-based milk composition of the present invention may also contain grain powder or plant-based milk other than the aforementioned liquefied grain solution and saccharified grain solution. Examples of the "plant-based milk other than the aforementioned liquefied grain solution and saccharified grain solution" include a suspension of grain powder in water, and an extract liquid or juice from grain, and a liquid obtained by crushing or grinding grain, which have been described hereinbefore for the production of the liquefied grain solution and saccharified grain solution.

However, since a larger amount of the other plant-based milk and grain powder reduces the effects of the present invention, the proportion of the other plant-based milk and grain powder in the plant-based milk composition of the present invention is preferably 49 mass% or less, more preferably 20 mass% or less, and most preferably 1 mass% or less, based on the total amount of the aforementioned liquefied grain solution and saccharified grain solution in the plant-based milk composition, both in terms of solids content.

The plant-based milk composition of the present invention preferably has a mass ratio between sodium and potassium (Na:K) of from 1:0.5 to 1:10, more preferably from 1:0.8 to 1:6, even more preferably from 1:2 to 1:4. When the mass ratio Na:K is within the range from 1:0.5 to 1:10, the plant-based milk composition has a favorable milky flavor.

Examples of an ingredient as the sodium-source incorporated into the plant-based milk composition of the present invention include sodium salts, such as sodium citrate, disodium phosphate, sodium hexametaphosphate, tetrasodium pyrophosphate, and sodium chloride; and also food products and food additives containing large amounts of sodium. In view of obtaining a plant-based milk composition having a favorable flavor, it is preferable to use at least sodium chloride.

The origin of the ingredient as the sodium-source is not particularly limited, and the ingredient may be derived from minerals, synthetics, or seawater.

The sodium content of the plant-based milk composition of the present invention is preferably 0.005 to 0.5 mass%, more preferably 0.01 to 0.4 mass%, and even more preferably 0.02 to 0.2 mass%.

Examples of an ingredient as the potassium-source incorporated into the plant-based milk composition of the present invention include potassium salts including organic acids, such as potassium citrate and tripotassium citrate, and also potassium phosphate and potassium chloride; and also food products and food additives containing large amounts of potassium, such as potassium caseinate and whey minerals.

As for the origin of the ingredient as the potassium-source, the ingredient may be derived from minerals, synthetics, or seawater. In the present invention, it is preferable to use potassium salt from seawater, in view of obtaining a plant-based milk composition with "natural, mellow flavor" and "favorable richness and aftertaste."

The "potassium salt from seawater" is a type of salt obtained from a solution which mainly contains potassium chloride as a solute and which is obtained by removing salts of magnesium etc. from a crude magnesium chloride solution called bittern, or *nigari,* which contains mainly magnesium as a result of removal of sodium from seawater to manufacture table salt.

In the present invention, the potassium salt from seawater used may have a potassium chloride content of 51 mass% or more in terms of solids content, and preferably has a potassium chloride content of 70 mass% or more in terms of solids content. The potassium chloride content of the potassium salt from seawater is preferably 99.7 mass% or less in terms of solids content.

In the present invention, the potassium salt from seawater used preferably has a solids content of 95 mass% or more, more preferably 97 mass% or more. The "solids content" is an amount excluding water (in this context, water encompasses moisture), and can be measured by a drying method involving heating under atmospheric pressure or by the Karl-Fischer method.

Examples of the potassium salt from seawater may include "Ocean Kali" (from FC Chemical Co., Ltd.), "Refined Potassium Chloride" (from Diasalt Corporation), and "Kali Base" (from FC Chemical Co., Ltd.).

The potassium content of the plant-based milk composition of the present invention is preferably 0.01 to 2 mass%, more preferably 0.03 to 1.6 mass%, and most preferably 0.1 to 1 mass%.

In cases where the potassium salt from seawater is used, the content thereof in the plant-based milk composition of the present invention depends on the type of plant-based milk composition and its intended use, and the content is preferably 0.01 to 5 mass%, more preferably 0.04 to 1.5 mass%, and even more preferably 0.04 to 0.5 mass%, based on the plant-based milk composition.

In cases where the potassium salt from seawater is used, the content of potassium derived from the potassium salt from seawater preferably accounts for 50 mass% or more, more preferably 60 mass% or more, of the total amount of potassium in the plant-based milk composition of the present invention.

The plant-based milk composition of the present invention preferably contains an edible oil/fat, since it can impart a higher richness.

Examples of the edible oil/fat include, but not limited to, various vegetable oils/fats and animal oils/fats, such as palm oil, palm kernel oil, coconut oil, corn oil, cottonseed oil, soybean oil, rape-seed oil, rice bran oil, sunflower oil, safflower oil, butterfat, tallow, lard, cacao butter, fish oil, and whale oil; and processed oils/fats obtained by subjecting the aforementioned an oil/fat to one or more treatments selected from hydrogenation, fractionation, and interesterification. In the present invention, these oils/fats may be used singly or in combinations of two or more thereof.

The preferable content of the edible oil/fat in the plant-based milk composition of the present invention depends on the intended use, but the content is preferably 0.3 mass% or more, more preferably 1 mass% or more, and most preferably 2 mass% or more, based on the plant-based milk composition. The content is preferably 49 mass% or less, more preferably 36 mass% or less, and most preferably 21 mass% or less, in view of emulsion stability.

The above-described content of the edible oil/fat is inclusive of the oil/fat contents of the plant-based milks and other components, which will be described below.

The plant-based milk composition of the present invention has favorable milky richness in spite of containing no butterfat. Thus, it is preferable in the present invention to use no butterfat or any other animal-derived oils/fats, including animal oils/fats such as tallow, lard, fish oil, and whale oil and also processed oils/fats obtained by subjecting an animal oil/fat to one or more treatments selected from hydrogenation, fractionation, and interesterification. This allows the plant-based milk composition of the present invention to be used for food products that can be eaten by vegetarians and vegans.

The plant-based milk composition may contain a saccharide.

Examples of the saccharide include refined sugar, granulated sugar, powdered sugar, sucrose, syrup, honey, glucose, fructose, raw sugar, maltose, lactose, cyclodextrin, enzyme-saccharified starch syrup, acid-saccharified starch syrup, saccharified products of reduced starch, reduced starch syrup, polydextrose, reduced lactose, sorbitol, xylitol, maltitol, erythritol, mannitol, high-fructose syrup, sucrose-bonded starch syrup, caramel, maple sugar, oligosaccharide, xylose, trehalose, fructo-oligosaccharide, soybean oligosaccharide, galactooligosaccharide, xylooligosaccharide, arabinose, palatinose oligosaccharide, agarooligosaccharide, chitinoligosaccharide, lactosucrose, hemicellulose, molasses, isomaltooligosaccharide, maltooligosaccharide, coupling sugar, raffinose, lactulose, theander-oligosaccharide, and gentio-oligosaccharide.

However, it is preferable that the plant-based milk composition of the present invention should be substantially free from saccharide other than those derived from the liquefied grain solution and the saccharified grain solution, in view of obtaining more natural sweetness and richness. The expression "substantially free from saccharide other than those derived from the liquefied grain solution and the saccharified grain solution" means that saccharides derived from the liquefied grain solution and the saccharified grain solution account for at least 80 mass% of the total amount of saccharides in the plant-based milk composition. The saccharides derived from the liquefied grain solution and the saccharified grain solution more preferably account for at least 90 mass%, more preferably at least 95 mass%, and most preferably 100 mass% of the total amount of saccharides in the plant-based milk composition.

In cases where the plant-based milk composition of the present invention is used as a food product that can be eaten by vegetarians and vegans, it must not contain saccharides of animal origin, particularly lactose derived from dairy products and processed sugars therefrom.

The plant-based milk composition may contain a thickening stabilizer.

Examples of the thickening stabilizer include guar gum, xanthan gum, carrageenan, tamarind gum, pectin, microcrystalline cellulose, furcelleran, agar, gelatin, gellan gum, glucomannan, alginic acid, alginate, curdlan, locust bean gum, gum arabic, pullulan, psyllium seed gum, carboxymethyl cellulose, methylcellulose, egg white powder, and other thickening polysaccharides and gelling agents. These may be used singly or in combinations of two or more thereof.

In cases where the thickening stabilizer is contained, the content thereof is preferably 0.01 to 5 mass%, more preferably 0.1 to 3 mass%, based on the plant-based milk composition, in view of emulsion stability and flavor.

The plant-based milk composition may contain an emulsifier. Examples of emulsifier may include glycerol fatty acid esters, sucrose fatty acid esters, propylene glycol fatty acid esters, glycerol organic acid fatty acid esters, polyglycerol fatty acid esters, polyglycerol esters of interesterified ricinoleic acid, calcium stearoyl lactylate, sodium stearoyl lactylate, polyoxyethylene fatty acid esters, polyoxyethylene sorbitan fatty acid esters, lecithin, enzyme-treated lecithin, and saponins. These may be used singly or in combinations of two or more thereof.

In cases where the emulsifier is contained, the content thereof is preferably 0.01 to 5 mass%, more preferably from 0.1 to 3 mass%, based on the plant-based milk composition, in view of emulsification stability and flavor.

The plant-based milk composition may contain other ingredients in addition to those listed above, as long as the other ingredients do not impair the effects of the present invention.

Examples of the other ingredients include water, and food materials and food additives, including starches; acidulants such as acetic acid, lactic acid, and gluconic acid; sweeteners such as stevia and aspartame; colorants such as β-carotene, caramel and Monascus color; antioxidants such as tocopherol and tea extract; seasonings, pH adjusters, food preservatives, shelf-life improvers; fruits, fruit juice, coffee, spices, cocoa mass, and cocoa powder.

The other ingredients may be used arbitrarily as long as they do not defeat the object of the present invention; however, it is preferable that the total amount of the other ingredients, excluding water, should be within the range of 5 mass% or less, more preferably 1 mass% or less, based on the plant-based milk composition of the present invention.

In cases where the plant-based milk composition of the present invention is used as a food product that can be eaten by vegetarians and vegans, it must not contain materials of animal origin as the other ingredients.

The plant-based milk composition of the present invention preferably has a solids content of 2 to 60 mass%, more preferably 10 to 60 mass%, and particularly preferably 20 to 40 mass%.

In the present invention, the solids content is calculated by subtracting the amount of water from the total amount.

The plant-based milk composition of the present invention preferably has a water content of 40 to 98 mass%, more preferably 40 to 90 mass%, and particularly preferably 60 to 80 mass%.

The plant-based milk composition of the present invention preferably has a protein content of 0.1 to 10 mass%, more preferably 0.3 to 8 mass%, and particularly preferably 1.0 to 5.0 mass%. A protein content of 0.1 mass% or more provides favorable milky flavor and richness, and a protein content of 10 mass% or less facilitates prevention of grit formation during storage.

Next, the method for producing the above-described plant-based milk composition will be described.

The method for producing the plant-based milk composition of the present invention is characterized by mixing the liquefied grain solution and the saccharified grain solution.

In other words, it is characterized in that when a plant-based milk or food or beverage containing a plant-based milk is produced, a part or the whole of the plant-based milk is replaced with the liquefied grain solution and the saccharified grain solution.

A preferred method in such cases will be described below.

The method for producing the liquefied grain solution and that for the saccharified grain solution are as described hereinbefore.

In cases where the plant-based milk composition of the present invention consisting of plant-based milks is produced, the liquefied grain solution and the saccharified grain solution are mixed. As described above, the mixing ratio between the liquefied grain solution and the saccharified grain solution on that occasion is preferably such that the saccharified grain solution is present in an amount of 0.01 to 3 parts by mass, more preferably 0.01 to 1 part by mass, particularly preferably 0.2 to 0.6 part by mass, per 1 part by mass of the liquefied grain solution, all in terms of solids content.

On this occasion, in cases where plant-based milk other than the aforementioned liquefied grain solution and saccharified grain solution is also incorporated, it is preferable that the amount of the other plant-based milk in the plant-based milk composition should be 49 mass% or less, more preferably 20 mass% or less, and most preferably 1 mass% or less, based on the total amount of the liquefied grain solution and the saccharified grain solution, as described hereinbefore.

An exemplary preferred method for producing the plant-based milk composition of the present invention will be described below. The description below is about a case where the composition does not contain plant-based milk other than the aforementioned liquefied grain solution and saccharified grain solution but contains ingredients in addition to the plant-based milks.

First, the liquefied grain solution, the saccharified grain solution, and optionally water are combined. Preferably, a potassium-containing ingredient such as the aforementioned potassium salt from seawater, and/or a sodium-containing ingredient, and optionally an oil/fat, a saccharide, an emulsifier, a thickening stabilizer, etc., are added thereto, followed by mixing. The amounts of the liquefied grain solution and the saccharified grain solution and the mixing ratio therebetween on this occasion are as described above. If necessary, the resulting mixture may be homogenized using a homogenizing device, such as a valve-type homogenizer, homogenizing mixer, or colloid mill, at a pressure in the range from 0 to 100 MPa.

If necessary, it is possible to conduct UHT/HTST/low temperature sterilization by a direct heating method such as the injection method or infusion method or an indirect heating method such as plate-type heating, tubular-type heating, or scraping-type heating; or thermal sterilization or thermal pasteurization such as batch-type heating, retort heating, or microwave heating; and it is also possible to conduct heating by cooking over an open fire. After heating, homogenization may be conducted again, if necessary. Further, cooling such as rapid cooling or slow cooling may be conducted, if necessary.

The plant-based milk composition of the present invention can be consumed directly as-is as a beverage or a food product, or may be used as-is as an alternative to cow milk, concentrated milk, coffee whitener, whipped cream, or fresh cream.

The plant-based milk composition of the present invention can also be used, as an alternative composition to cow milk, in various food products. Examples of the food products include cream such as custard cream and white cream; stews and gratins made with such cream; desserts such as Bavarian cream; frozen desserts such as ice cream; pastes such as flour-based pastes; mayonnaise and other dressings; and cheese-like food products; and the plant-based milk composition of the present invention can also be used as an ingredient to be kneaded into processed food products, such as bread, confectionery, ham, and sausages; and also be used for fillings, topping, and spreads. The plant-based milk composition of the present invention may be stored in a refrigerated or frozen state, if necessary.

[1] A plant-based milk composition comprising a liquefied grain solution and a saccharified grain solution.
[2] The plant-based milk composition according to [1], wherein the grain in the liquefied grain solution or saccharified grain solution comprises oats.
[3] The plant-based milk composition according to [1] or [2], wherein a raw grain for the liquefied grain solution and a raw grain for the saccharified grain solution are the same.
[4] The plant-based milk composition according to any one of [1] to [3], wherein the saccharified grain solution is present in an amount of 0.01 to 3 parts by mass per 1 part by mass of the liquefied grain solution, both in terms of solids content.
[5] The plant-based milk composition according to any one of [1] to [4], wherein a total content of trisaccharides and higher-saccharides is larger than a total content of monosaccharides and disaccharides in a saccharide profile of the liquefied grain solution, and
   a total content of monosaccharides and disaccharides is smaller than a total content of trisaccharides and higher-saccharides in a saccharide profile of the saccharified grain solution.
[6] The plant-based milk composition according to [5], wherein the liquefied grain solution is a liquid from decomposition of starch in the grain with α-amylase, and
   the saccharified grain solution is liquid from decomposition of starch in the grain or of a decomposition product thereof, with β-amylase and/or glucoamylase.
[7] A method for producing a plant-based milk composition, comprising mixing a liquefied grain solution and a saccharified grain solution.
[8] The method according to claim [7], wherein the grain in the liquefied grain solution or saccharified grain solution comprises oats.
[9] The method according to [7] or [8], comprising adding potassium salt from seawater.

### Examples

The present invention will now be described in more detail by way of examples and comparative examples, which are not intended to limit the present invention in any way.

### <Production of liquefied grain solution>

75 parts by mass of water was heated to 60°C, and 0.15 parts by mass of α-amylase (BAN 480L, from Novozymes) and 25 parts by mass of oat powder (from Glanbia) (moisture content 14 mass%, oil/fat content 3.0 mass%, protein content 11.9 mass%, potassium content 0.330 mass%, sodium content 0.008 mass%) were added thereto under stirring. The mixture was maintained in that state for 3 hours to allow the enzyme reaction to occur. The mixture was kept at 90°C for 15 minutes to inactivate the enzyme, then cooled to 5°C, and homogenized at a pressure of 5 MPa to obtain a liquefied grain solution A.

The liquefied grain solution A had a water content of 78.5 mass%, an oil/fat content of 0.75 mass%, a protein content of 3.0 mass%, a solids content of 21.5 mass%, a potassium content of 0.08 mass%, and a sodium content of 0 mass%. In the saccharide profile of the liquefied grain solution A, the total content of monosaccharides and disaccharides was 20 mass%, and the total content of trisaccharides and higher-saccharides was 80 mass%.

### <Production of saccharified grain solution 1>

100 parts by mass of the above liquefied grain solution A was heated to 60°C, and 0.3 parts by mass of glucoamylase (Amylase AG, from Novozymes) was added thereto under stirring. The mixture was maintained in that state for 3 hours to allow the enzyme reaction to occur. The mixture was kept at 90°C for 15 minutes to inactivate the enzyme, then cooled to 5°C, and homogenized at a pressure of 5 MPa to obtain a saccharified grain solution A.

The saccharified grain solution A had a water content of 78.5 mass%, an oil/fat content of 0.75 mass%, a protein content of 3.0 mass%, a solids content of 21.5 mass%, a potassium content of 0.08 mass%, and a sodium content of 0 mass%. In the saccharide profile of the saccharified grain solution A, the total content of monosaccharides and disaccharides in the sugar composition was 85 mass%, and the total content of trisaccharides and higher-saccharides was 15 mass%.

### <Production of saccharified grain solution 2>

75 parts by mass of water was heated to 60°C, and 0.15 parts by mass of α-amylase (BAN 480L, from Novozymes), 0.3 parts by mass of glucoamylase (Amylase AG, from Novozymes) and 25 parts by mass of oat powder (from Glanbia) (moisture content 14 mass%, oil/fat content 3.0 mass%, protein content 11.9 mass%, potassium content 0.330 mass%, sodium content 0.008 mass%) were added thereto under stirring. The mixture was maintained in that state for 3 hours to allow the enzyme reaction to occur. The mixture was kept at 90°C for 15 minutes to inactivate the enzymes, then cooled to 5°C, and homogenized at a pressure of 5 MPa to obtain a saccharified grain solution B.

The above saccharified grain solution B had a water content of 78.5 mass%, an oil/fat content of 0.75 mass%, a protein content of 3.0 mass%, a solids content of 21.5 mass%, a potassium content of 0.08 mass%, and a sodium content of 0 mass%. In the saccharide profile of the saccharified grain solution B, the total content of monosaccharides and disaccharides in the sugar composition was 85 mass%, and the content of trisaccharides and higher-saccharides was 15 mass%.

### <Production of plant-based milk composition>

### Example 1

75 parts by mass of the liquefied grain solution A and 20 parts by mass of the saccharified grain solution A were mixed, and 0.385 parts by mass of table salt, 0.02 parts by mass of xanthan gum, and 1.595 parts by mass of water were added thereto, followed by mixing. 3 parts by mass of sunflower oil was then added thereto, followed by emulsifying, to prepare a preliminary emulsion. The preliminary emulsion was homogenized at a pressure of 3 MPa, sterilized at 140°C for 4 seconds in a VTIS sterilizer (UHT sterilizer, from ALFA LAVAL), homogenized again at a pressure of 5 MPa, and cooled to 5°C to obtain a plant-based milk composition A of the present invention.

The plant-based milk composition A had a water content of 76 mass%, a solids content of 24 mass%, an oil/fat content of 3.7 mass%, a protein content of 2.9 mass%, and a mass ratio of sodium to potassium of 1:0.51.

The plant-based milk composition A had a favorable milky flavor, natural sweetness and richness. Despite its solids content as high as 24 mass%, the composition A had fluidity. No grit or sediment was found in the composition A even after 120 days of storage at 5°C. Thus, the composition A was a highly convenient plant-based milk.

### Example 2

A plant-based milk composition B of the present invention was obtained by following the same formulation and production method as in Example 1, except for replacing the saccharified grain solution A with the saccharified grain solution B.

The plant-based milk composition B had a water content of 76 mass%, a solids content of 24 mass%, an oil/fat content of 3.7 mass%, a protein content of 2.9 mass%, and a sodium to potassium mass ratio of 1:0.51.

The plant-based milk composition B had a favorable milky flavor, natural sweetness, and richness. Despite its solids content as high as 24 mass%, the composition B had fluidity. No grit or sediment was found in the composition B even after 120 days of storage at 5°C. Thus, the composition B was a highly convenient plant-based milk.

### Example 3

A plant-based milk composition C of the present invention was obtained by following the same formulation and production method as in Example 1, except for replacing the saccharified grain solution A with the saccharified grain solution B, changing the amount of the table salt from 0.385 parts by mass to 0.135 parts by mass, and adding 0.25 parts by mass of potassium salt from seawater (Ocean Kali, from FC Chemical Co.).

The plant-based milk composition C had a water content of 76 mass%, a solids content of 24 mass%, an oil/fat content of 3.7 mass%, a protein content of 2.9 mass%, and a sodium to potassium mass ratio of 1:3.81.

The plant-based milk composition C had a favorable milky flavor, natural sweetness, and richness. Despite its solids content as high as 24 mass%, the composition C had fluidity. No grit or sediment was found in the composition C even after 120 days of storage at 5°C. Thus, the composition C was a highly convenient plant-based milk.

### Example 4

A plant-based milk composition D of the present invention was obtained by following the same formulation and production method as in Example 1, except that 3 parts by mass of sunflower oil was not added and that the amount of water was changed from 1.595 parts by mass to 4.595 parts by mass.

The plant-based milk composition D had a water content of 79 mass%, a solids content of 21 mass%, an oil/fat content of 0.7 mass%, a protein content of 2.9 mass%, and a sodium to potassium mass ratio of 1:0.51.

The plant-based milk composition D had a favorable milky flavor and natural sweetness, but was slightly weak in richness. Despite its solids content as high as 21 mass%, the composition D had fluidity. No grit or sediment was found in the composition D even after 120 days of storage at 5°C. Thus, the composition D was a highly convenient plant-based milk.

### Comparative Example 1

A comparative plant-based milk composition E was obtained by following the same formulation and production method as in Example 1, except for the following: the saccharified grain solution A was not added; the amount of the liquefied grain solution A was changed from 70 parts by mass to 95 parts by mass; the amount of the table salt was changed from 0.385 parts by mass to 0.135 parts by mass; and 0.25 parts by mass of potassium salt from seawater (Ocean Kali, from FC Chemical Co.) was added.

The plant-based milk composition E had a water content of 76 mass%, a solids content of 24 mass%, an oil/fat content of 3.7 mass%, a protein content of 2.9 mass%, and a sodium to potassium mass ratio of 1:3.81.

The plant-based milk composition E was weak in sweetness, richness, and milky flavor. The composition E had fluidity despite its solids content as high as 24 mass%. Slight grit and sediment were found in the composition E after 120 days of storage at 5°C.

### Comparative Example 2

A comparative plant-based milk composition F was obtained by following the same formulation and production method as in Example 1, except for the following: the liquefied grain solution A was not added; the amount of the saccharified grain solution A was changed from 20 parts by mass to 95 parts by mass; the amount of the table salt was changed from 0.385 parts by mass to 0.135 parts by mass; and 0.25 parts by mass of potassium salt from seawater (Ocean Kali, from FC Chemical Co.) was added.

The plant-based milk composition F had a water content of 76 mass%, a solids content of 24 mass%, an oil/fat content of 3.7 mass%, a protein content of 2.9 mass%, and a sodium to potassium mass ratio of 1:3.81.

The plant-based milk composition F had overly and somewhat unnatural sweetness, with weak richness and no milky flavor. The composition F had fluidity despite its solids content as high as 24 mass%. No grit or sediment was found in the composition F even after 120 days of storage at 5°C.

### Comparative Example 3

Water (75 parts by mass) was heated to 60°C, and 25 parts by mass of oat powder (from Glanbia) (oil/fat content 3.0 mass%, protein content 11.9 mass%, potassium content 0.330 mass%, sodium content 0.008mass%) was added thereto, followed by mixing. The mixture was homogenized at a pressure of 5 MPa to obtain oat milk a.

0.385 parts by mass of table salt, 0.02 parts by mass of xanthan gum, and 1.595 parts by mass of water were added to 95 parts by mass of the oat milk a, followed by mixing. 3 parts by mass of sunflower oil was then added thereto, followed by emulsifying, to prepare a preliminary emulsion. The preliminary emulsion was homogenized at a pressure of 3 MPa, sterilized at 140°C for 4 seconds in a VTIS sterilizer (UHT sterilizer, from ALFA LAVAL), homogenized again at a pressure of 5 MPa, and cooled to 5°C to obtain a comparative plant-based milk composition G.

The plant-based milk composition G had a water content of 76 mass%, a solids content of 24 mass%, an oil/fat content of 3.7 mass%, a protein content of 2.9 mass%, and a sodium to potassium mass ratio of 1:3.81.

Homogenization for the plant-based milk composition G was difficult because of the extremely high viscosity thereof, and the composition G was thus in a non-uniform state. The composition G had almost no sweetness, richness, or milky flavor. During 120 days of storage at 5°C, severe separation occurred in the composition G, resulting in the formation of a large amount of sediment.

### Example 5

A plant-based milk composition H of the present invention was obtained by following the same formulation and production method as in Example 1, except for changing the amount of the liquefied grain solution A from 75 parts by mass to 20 parts by mass and the amount of the saccharified grain solution A from 20 parts by mass to 75 parts by mass.

The plant-based milk composition H had a water content of 76 mass%, a solids content of 24 mass%, an oil/fat content of 3.7 mass%, a protein content of 2.9 mass%, and a sodium to potassium mass ratio of 1:0.51.

The plant-based milk composition H had a favorable milky flavor, slightly pronounced yet natural sweetness, and richness. Despite its solids content as high as 24 mass%, the composition H had fluidity. No grit or sediment was found in the composition H even after 120 days of storage at 5°C. Thus, the composition H was a highly convenient plant-based milk.

### Example 6

A plant-based milk composition I of the present invention was obtained by following the same formulation and production method as in Example 1, except for changing the amount of the liquefied grain solution A from 75 parts by mass to 55 parts by mass and the amount of the saccharified grain solution A from 20 parts by mass to 40 parts by mass.

The plant-based milk composition I had a water content of 76 mass%, a solids content of 24 mass%, an oil/fat content of 3.7 mass%, a protein content of 2.9 mass%, and a sodium to potassium mass ratio of 1:0.51.

The plant-based milk composition I had a favorable milky flavor, natural sweetness, and richness. Despite its solids content as high as 24 mass%, the composition I had fluidity. No grit or sediment was found in the composition I even after 120 days of storage at 5°C. Thus, the composition I was a highly convenient plant-based milk.

### Industrial Applicability

The present invention provides a plant-based milk that has natural sweetness and richness, has fluidity even with a high solids content, is free from grit or sediment, and thus offers great convenience.

Also, according to the present invention, a plant-based milk having such characteristics can be produced stably with consistent quality and minimal variation.

## Claims

1. A plant-based milk composition comprising a liquefied grain solution and a saccharified grain solution.

2. The plant-based milk composition according to claim 1, wherein the grain in the liquefied grain solution or saccharified grain solution comprises oats.

3. The plant-based milk composition according to claim 1 or 2, wherein a raw grain for the liquefied grain solution and a raw grain for the saccharified grain solution are the same.

4. The plant-based milk composition according to claim 1 or 2, wherein the saccharified grain solution is present in an amount of 0.01 to 3 parts by mass per 1 part by mass of the liquefied grain solution, both in terms of solids content.

5. The plant-based milk composition according to claim 1 or 2, wherein a total content of trisaccharides and higher-saccharides is larger than a total content of monosaccharides and disaccharides in a saccharide profile of the liquefied grain solution, and
a total content of monosaccharides and disaccharides is smaller than a total content of trisaccharides and higher-saccharides in a saccharide profile of the saccharified grain solution.

6. The plant-based milk composition according to claim 5, wherein the liquefied grain solution is a liquid from decomposition of starch in the grain with α-amylase, and
the saccharified grain solution is liquid from decomposition of starch in the grain or a decomposition product thereof, with β-amylase and/or glucoamylase.

7. A method for producing a plant-based milk composition, comprising mixing a liquefied grain solution and a saccharified grain solution.

8. The method according to claim 7, wherein the grain in the liquefied grain solution or saccharified grain solution comprises oats.

9. The method according to claim 7 or 8, comprising adding potassium salt from seawater.
